# EUROPEAN PATENT SPECIFICATION

(11) **EP 2 080 323 B1**
(45) Date of publication and mention of the grant of the patent: **17.02.2010**
(21) Application number: 07820674.5
(22) Date of filing: 28.09.2007
(51) Int. Cl.: H04L 12/42

(54) **METHOD FOR PROTECTION SWITCHING**
VERFAHREN ZUR SCHUTZUMSCHALTUNG
PROCÉDÉ DE COMMUTATION DE PROTECTION

(30) Priority: 29.09.2006 EP 06020609
(43) Date of publication of application: 22.07.2009
(73) Proprietor: Nokia Siemens Networks GmbH & Co. KG, 81541 München (DE)
(72) Inventor: DE FRIAS REBELO NUNES, Pedro Ricardo, 2795016 Linda-a-Velha (PT)
(86) International application number: PCT/EP2007/060286
(87) International publication number: WO 2008/037782

(56) References cited:
- WO-A-03/077459
- US-A1- 2006 109 802
- US-B1- 6 226 111

## Description

The invention relates to a method for protection switching in a data network according to claim 1.

Data networks including a plurality of data rings share certain ring spans to enable protection switching and, therefore, prevent single points of failures. However, if Ethernet technology or a similar technology is chosen for data transmission such a topology creates additional problems because it is necessary to prevent the formation of loops in the network.

The principle of the Ethernet ring protection mechanism ERP is described in US Patent 6,430,151. A redundancy manager, which is connected to the line ends of a ring containing a plurality of nodes, checks the network by transmitting and receiving test packets. If there is an interruption in the ring, the redundancy manager connects the line ends. Such is the case also in document US-B1-6226 111.

This method is described in detail for one or more rings having a common node, in US Patent 6,766,482 B1 assigned to Extreme Networks and is known as "Ethernet Automatic Protection Switching" EAPS. Document WO-A-03/077 459 also describes said method applied to exactly two rings.

Extreme Networks, Santa Clara, Ca (US) "ExtremeWare 7.1.0 User Guide", pages 281 - 290 describes two data rings with shared nodes and a shared link. One ring includes a controller; the other ring includes a partner. If the common link fails the controller is responsible for blocking to prevent a "super loop". Before the common link comes back the controller goes from a blocking state to a "preforwarding" state, where the ports are still temporarily blocked to prevent a super loop. This protection procedure requires additional exchanges of different control packets between the controller and the partner.

Another example of a method for protection switching is described in the European Patent Application EP1729453. In this document the disadvantages of failures in networks with shared loops are concerned. Still, as is described in more detail below, not all problems that arise from networks with shared loops can be solved with the method disclosed therein.

It is an object of the present invention to provide a method of protection switching that amongst other things overcomes the problems described above.

A suchlike method is described in claim 1.

The present invention provides a method for protection switching in a data network including at least two rings with a shared span and a plurality of nodes, each ring having an associated ring manager for interrupting the respective ring to avoid a loop in said ring and for monitoring the respective ring by sending out and monitoring test data. The ring managers have dedicated different priorities and the monitoring of the ring is performed by checking whether the sent out test data are lost or not. It is an aspect of the invention that a request for performing the protection switching due to lost test data to a ring manager with lower priority is suppressed for a time period equal or longer than a time needed by a ring manager with higher priority to perform protection switching.

Advantageously, problems arising from faults occurring in shared spans in a network can be avoided. Moreover, the inventive method can be applied to Ethernet networks with Ethernet ring protection, for example.

Further embodiments of the invention are specified in the depending claims.

The present invention is described by way of different examples and accompanying drawings. The invention can be extended to a more complex network and to a network similar to the Ethernet. The invention will became more apparent with reference to the following detailed description along with the accompanying drawings, in which
Figure 1 shows a two ring network with two ring managers,
Figure 2 shows a failure in a common span and the new network structure of the network from Figure 1 after protection switching,
Figure 3 shows the structure of more complex network with a plurality of shared spans, and
Figure 4 shows the network structure of the more complex network from Figure 3 after protection switching.

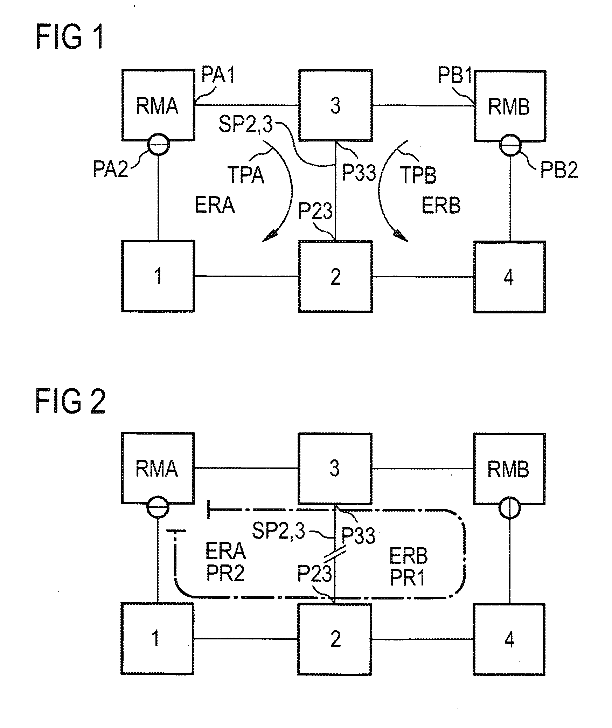

Figure 1 shows a network having two rings: a first ring ERA with nodes 1, 2, 3 and an associated ring manager RMA, as well as a second ring ERB with nodes 2, 3, 4 and an associated ring manager RMB. In this example, ring manager RMB has a higher priority PR1 than the ring manager RMA with priority PR2. Each port of a ring manager or a node can transmit and receive data.

Both rings ERA and ERB share the span SP2,3 between the "common span nodes" 2 and 3 (in this case a common or shared span node is a node that has at least a port P33, P23 connected to the common span, or is exceptionally inserted between these "end nodes" of the common span). According to the Ethernet requirements each ring manager RMA, RMB interrupts or blocks ("breaks") one of its ports, e.g. PA2 and PB2, so that there is no connection between the ports PA1 and PA2 or PB1 and PB2, which are shown on different sides of the ring managers in the drawing. Therefore, (data) loops are avoided in the network.

Each ring manager supervises or monitors its associated ring. Ring manager RMA supervises Ring ERA by sending test data or "test packets" TPA at the first data port PA1 and by subsequently receiving these "test packets" at the second port PA2 over a virtual control local area network known as VCLAN, e.g. realized by a different wavelength or time slot on the same fibre where the data is transmitted. A failure or an interruption, e.g. between node 1 and node 2, would prevent the ring manager RMA from receiving its own test packets TPA. The ring manager RMA would determine "loss of test packets" LOTP and unblock the second port PA2. After this protection switching node 1 would then be connected over ring manager RMA with node 3 and therefore re-connected with the network. Ring ERB is controlled in the same way by sending test packets TPB.

Regarding now Figure 2 the common span SP2,3 between its common span nodes 2 and 3 is erroneously interrupted. In this case the common span nodes 2 and 3 will detect the fault (i.e. not all signals are received at the nodes) and send out a "failure message". This message is sent to the ring manager of higher priority PR1 only. In this case, this is ring manager RMB, as described above. Subsequently, RMB unblocks its second port PB2 to re-connect the nodes to the network. All common span nodes know the specific priorities of the ring managers from their own management data base or from a management system, for example. The unblocking process performed by ring manager RMB leads to the network shown in Figure 2, in which all nodes are again connected after the "protection switching". In this first example, a "super loop", shown as a dot and dash line in Figure 2, is avoided as the second port PA2 of ring manager RMA remains blocked. Afterwards, test packets sent out by ring manager RMA will then be forwarded over the "new" network by ring manager RMB back to ring manager RMA.

However, cases may appear in which another problem occurs. If, for example, the process of protection switching takes more time than the time needed by ring manager RMA for sending out its test packets and waiting for their return, the test packets will not be forwarded to ring manager RMA in time. That means, ring manager RMA will detect a loss of its test packets and determine a fault in the ring (it will trigger a message "ring not healthy" or "loss of test packets"). In this case, ring manager RMA will then unblock its previously blocked port PA2. However, as ring manager RMB is still performing its protection switching and unblocking its port PB2 on its part, too, this will lead to an unintentional loop in the network.

In such a case the inventive method helps avoiding the problem explained above. According to the invention the trigger message "ring not healthy" is suppressed for a time period greater than the time needed for the process of protection switching by ring manager RMB. Generally speaking, the "loss of test packets" message is suppressed in ring managers according to their specific priority. In ring managers with lower priority the trigger message is suppressed longer than in ring managers with higher priority. For example, a ring manager with a certain priority needs to wait and must not execute "its" protection switching before all ring managers with a higher priority have definitely had enough time to perform their protection switching.

In the above example, this means that, although ring manager RMA will detect a loss of test packets, the message "ring not healthy" is suppressed in ring manager RMA until the protection switching performed by ring manager RMB is definitely finished. As ring manager RMA is forced to wait for the predetermined time period it will again receive its test packets after the protection switching process of ring manager RMB. Therefore, ring manager RMA will not erroneously unblock its blocked port PA2.

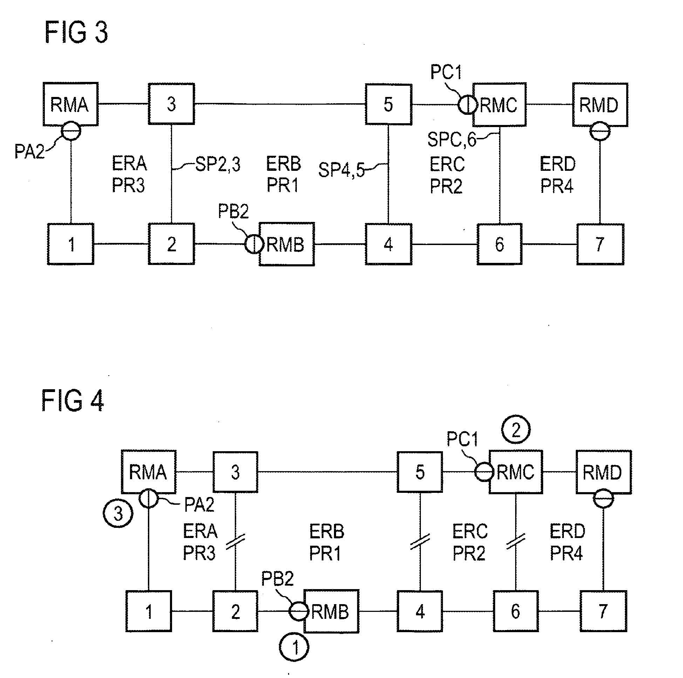

Figure 3 shows a more complex network with four rings and three common spans SP2,3; SP4,5; SPC,6 and four ring managers RMA, RMB, RMC, and RMD associated to four rings ERA, ERB, ERC, ERD. Each ring manager has a different priority PR3, PR1, PR2, and PR4, respectively. The priorities are allocated to the associated rings, wherein priority PR1 is the highest priority, followed by priority PR2, priority PR3 and, finally, priority PR4 as lowest priority. Only a few nodes 1 - 7 of the network are shown in Figure 3. The common spans are arranged between two nodes of adjacent rings, e.g. ERA and ERB, or between a ring manager and a node, e.g. RMC and node 6. One port of all ring managers is blocked to avoid a loop. The priority of the ring manager is higher in the centre of the network and becomes lower at the edges.

In this example it is assumed that all common spans SP2,3 SP4,5 and SPC,6 are interrupted at the same time, as shown in Figure 4.

In this case the protection switching according to the inventive method is handled in the following way.
1. The nodes 2 and 3 (belonging to ring ERB with priority PR1 and to ring ERA with priority PR3) as well as the nodes 4 and 5 (belonging to ring ERB of priority PR4 and to ring ERC of priority PR2) send their "failure (interruption) messages" to the associated ring manager RMB of the highest priority PR1. Ring manager RMB subsequently unblocks his open port PB2 at time (1).
2. About the same time (2) ring manager RMC detects the "link down" of common span SPC,6 and unblocks its open first port PC1.
3. All test packets sent out are then forwarded to rings of higher priority. So, the test packets of ring manager RMA (ring ERA, respectively) are forwarded to rings ERB and ERC, and the test messages of ring ERD are forwarded to rings ERC, ERB and ERA. Only these test packets of rings ERA and ERD are now necessary for the protection function as the ports of RMB and RMC are already unblocked. Therefore, the transmission of the test packets of the other ring managers could be stopped, for example. However, ring managers RMA of ring ERA and RMD of ring ERD are still transmitting their test packets. But, because of the still broken network, neither of the two ring managers RMA and RMD will receive their test packets. Both ring managers RMA and RMB will therefore detect a loss of test packets and both ring managers RMA and RMD will try to start the process of protection switching. However, according to the invention the "loss of test packets" trigger is suppressed in the ring manager having a lower priority (in this case ring manager RMD with priority PR4) until all ring managers with higher priorities (in this case ring manager RMA with priority PR3) have taken their protection measures. This means, ring manager RMD will wait until RMA has detected the loss of test packets, triggered the protection switching and the actual unblocking of the second port PA2 of ring manager RMA is done. When these steps are taken the network is intact again and ring manager RMD will receive its test packets again, over the newly arranged network. Ring manager RMD will not take any protection switching measures afterwards, of course.

In a variation of the method test packets may send to all rings, but they are only transmitted over ring managers with higher priority. Also the link failure message may be sent to all ring managers, but only the associated ring manager of the broken shared span with higher priority will accept it.

The suppression of the "loss of test packets" message can be accomplished in the following way, for example.

The test packets are monitored by the ring manager. If a test packet sent over the ring is not received an indication "health test failed" is stated by a health test monitor and sent to the ERP processor. If the ERP processor processed the health test failed indication immediately it would create a loop as already described. But as the detection of "health test failed" is suppressed by an inventive health test failed suppression unit, the ERP processor will wait for some time, for the rest of the network to "solve" the problem. If the problem is not solved after the preset suppression time, the ring manager node will implement the appropriate protection measures.

This suppression can be enabled or disabled by management / configuration, i.e. by management or configuration systems. The duration of the suppression times for each trigger can also be configured by said management / configuration, for example.

## Claims

1. A method for protection switching in a data network including at least two rings (ERP A, ERP B) with a shared span (SP2,3) and a plurality of nodes (1, 2, 3, 4, 5, 6, 7, RMA, RMB, RMC, RMD), each ring (ERA, ERB, ERC, ERD) having an associated ring manager (RMA, RMB, RMC, RMD) for interrupting the respective ring to avoid a loop in said ring and for monitoring the respective ring (ERA, ERB, ERC, ERD) by sending out and monitoring test data, the ring managers (RMA, RMB, RMC, RMD) having dedicated different priorities (PR1, PR2, PR3, PR4), and whereas the monitoring of the ring is performed by checking whether the sent out test data are lost or not,
such that
a request for performing the protection switching due to lost test data to a ring manager with lower priority is suppressed for a time period equal or longer than a time needed by a ring manager with higher priority to perform protection switching.

2. A method according to claim 1,
**characterised in that**
the request for performing the protection switching to a ring manager with a priority is suppressed for a time period equal or longer than a time needed by all ring managers with higher priorities to perform protection switching.

3. A method according to claim 1 or 2,
**characterised in that**
the network is an Ethernet network.

4. A method according to one of the preceding claims
**characterised in that**
the protection switching is part of the Ethernet Ring Protection.

5. A method according to one of the preceding claims,
**characterised in that**,
the pausing period is configurable by a management or configuration system.

6. Node of a network comprising means, which are formed in such a manner, that the method according to one of the claims 1 to 5 can be executed.

## Patentansprüche

1. Verfahren zur Schutzumschaltung in einem Datennetzwerk, das mindestens zwei Ringe (ERP A, ERP B) mit einem gemeinsam benutzten Abschnitt (SP2, 3) und mehrere Knoten (1, 2, 3, 4, 5, 6, 7, RMA, RMB, RMC, RMD) enthält, wobei jeder Ring (ERA, ERB, ERC, ERD) einen zugeordneten Ringmanager (RMA, RMB, RMC, RMD) zum Unterbrechen des jeweiligen Rings, um eine Schleife in dem Ring zu vermeiden, und zum Überwachen des jeweiligen Rings (ERA, ERB, ERC, ERD) durch Aussenden und Überwachen von Testdaten aufweist, wobei die Ringmanager (RMA, RMB, RMC, RMD) dedizierte verschiedene Prioritäten (PR1, PR2, PR3, PR4) aufweisen und wohingegen die Überwachung des Rings durchgeführt wird, indem überprüft wird, ob die ausgesendeten Testdaten verloren gehen oder nicht,
dergestalt, dass
eine Anforderung der Durchführung der Schutzumschaltung aufgrund verlorender Testdaten zu einem Ringmanager mit niedrigerer Priorität für einen Zeitraum größer oder gleich einer Zeit, die ein Ringmanager mit höherer Priorität benötigt, um Schutzumschaltung durchzuführen, unterdrückt wird.

2. Verfahren nach Anspruch 1, **dadurch gekennzeichnet, dass**
die Anforderung der Durchführung der Schutzumschaltung zu einem Ringmanager mit einer Priorität für einen Zeitraum größer oder gleich einer Zeit, die alle Ringmanager mit höheren Prioritäten benötigen, um Schutzumschaltung durchzuführen, unterdrückt wird.

3. Verfahren nach Anspruch 1 oder 2, **dadurch gekennzeichnet,**
**dass**
das Netzwerk ein Ethernet-Netzwerk ist.

4. Verfahren nach einem der vorhergehenden Ansprüche,
**dadurch gekennzeichnet, dass**
die Schutzumschaltung Teil des Ethernet-Ring-Schutzes ist.

5. Verfahren nach einem der vorhergehenden Ansprüche,
**dadurch gekennzeichnet, dass**
der Pausierzeitraum durch ein Management- oder Konfigurationssystem konfigurierbar ist.

6. Knoten eines Netzwerks mit Mitteln, die so gebildet sind,
dass das Verfahren nach einem der Ansprüche 1 bis 5 ausgeführt werden kann.

## Revendications

1. Procédé pour une commutation de protection dans un réseau de données incluant au moins deux anneaux (ERP A, ERP B) avec une couverture partagée (SP2, 3) et une pluralité de noeuds (1, 2, 3, 4, 5, 6, 7, RMA, RMB, RMC, RMD), chaque anneau (ERA, ERB, ERC, ERD) ayant un gestionnaire d'anneau (RMA, RMB, RMC, RMD) associé pour interrompre l'anneau respectif afin d'éviter une boucle dans ledit anneau et pour surveiller l'anneau (ERA, ERB, ERC, ERD) respectif en envoyant et en surveillant des données de test, les gestionnaires d'anneau (RMA, RMB, RMC, RMD) ayant des priorités différentes dédiées (PR1, PR2, PR3, PR4), et dans lequel la surveillance de l'anneau est effectuée en contrôlant si les données de test envoyées sont perdues ou non,
de telle sorte que
une demande d'exécution de la commutation de protection du fait de données de test perdues à un gestionnaire d'anneau ayant une priorité plus basse est réprimée pour une période de temps égale ou supérieure à une durée nécessaire pour qu'un gestionnaire d'anneau ayant une priorité plus élevée exécute une commutation de protection.

2. Procédé selon la revendication 1,
**caractérisé en ce que**
la demande d'exécution de la commutation de protection à un gestionnaire d'anneau ayant une priorité est réprimée pour une période de temps égale ou supérieure à une durée nécessaire pour que tous les gestionnaires d'anneau ayant des priorités plus élevées exécutent une commutation de protection.

3. Procédé selon la revendication 1 ou 2,
**caractérisé en ce que**
le réseau est un réseau Ethernet.

4. Procédé selon une des revendications précédentes
**caractérisé en ce que**
la commutation de protection fait partie de la Protection d'Anneau Ethernet.

5. Procédé selon une des revendications précédentes
**caractérisé en ce que**
la période de pause est configurable par un système de gestion ou de configuration.

6. Noeud d'un réseau comprenant des moyens, qui sont formés de telle manière que le procédé selon une des revendications 1 à 5 peut être exécuté.
